# EUROPEAN PATENT SPECIFICATION

(11) **EP 1 563 723 B1**
(45) Date of publication and mention of the grant of the patent: **30.09.2009**
(21) Application number: 05101063.5
(22) Date of filing: 14.02.2005
(51) Int. Cl.: A01B 71/06

(54) **Hitch assembly for an agricultural machine**
Kupplung für eine Landmaschine
Accouplement pour une machine agricole

(30) Priority: 13.02.2004 IT BO20040069
(43) Date of publication of application: 17.08.2005
(73) Proprietor: ARIES S.r.l., Umbertide (Perugia) (IT)
(72) Inventor: Bartolini, Bruno, 06024 Gubbio (IT)
(74) Representative: Jorio, Paolo

(56) References cited:
- EP-A- 0 568 854
- EP-A- 0 617 882
- EP-A- 1 252 807
- DE-A1- 3 140 917
- DE-A1- 3 612 322
- DE-A1- 3 613 708
- DE-A1- 4 242 995

## Description

The present invention relates to an agricultural machine hitch assembly.

An agricultural machine is known of the type comprising a drive unit having at least one power take-off having an output shaft rotating about a longitudinal axis; and an operating unit having an input shaft connectable in angularly fixed manner to the output shaft by a splined coupling.

The two shafts are connected by a hitch assembly comprising a supporting member, which is substantially in the form of a fork, supports the input shaft coaxially with the output shaft, and is mounted on a slide for moving the supporting member, and therefore the input shaft, to and from a position in which the two shafts are connected by the splined coupling.

The supporting member is connected in rotary manner to the slide via the interposition of a rolling bearing to permit rotation of the input shaft by the output shaft when the two are connected.

Known hitch assemblies of the type described above (see EP-A-1 252 807) have various drawbacks, mainly due to the presence of the rolling bearing, which makes them relatively complex and expensive, and the fact that, when the operating unit is running, the supporting member is also rotated by the output shaft of the power take-off.

It is an object of the present invention to provide an agricultural machine hitch assembly designed to eliminate the aforementioned drawbacks, and which is cheap and easy to produce.

According to the present invention, there is provided an agricultural machine hitch assembly, as claimed in Claim 1.

A non-limiting embodiment of the present invention will be described by way of example with reference to the accompanying drawings, in which:
Figure 1 shows a schematic view in perspective of an agricultural machine featuring a preferred embodiment of the hitch assembly according to the present invention;
Figures 2 and 3 show schematic views in perspective of the Figure 1 hitch assembly in two different operating positions;
Figure 4 shows a longitudinal section of a detail in Figures 2 and 3.

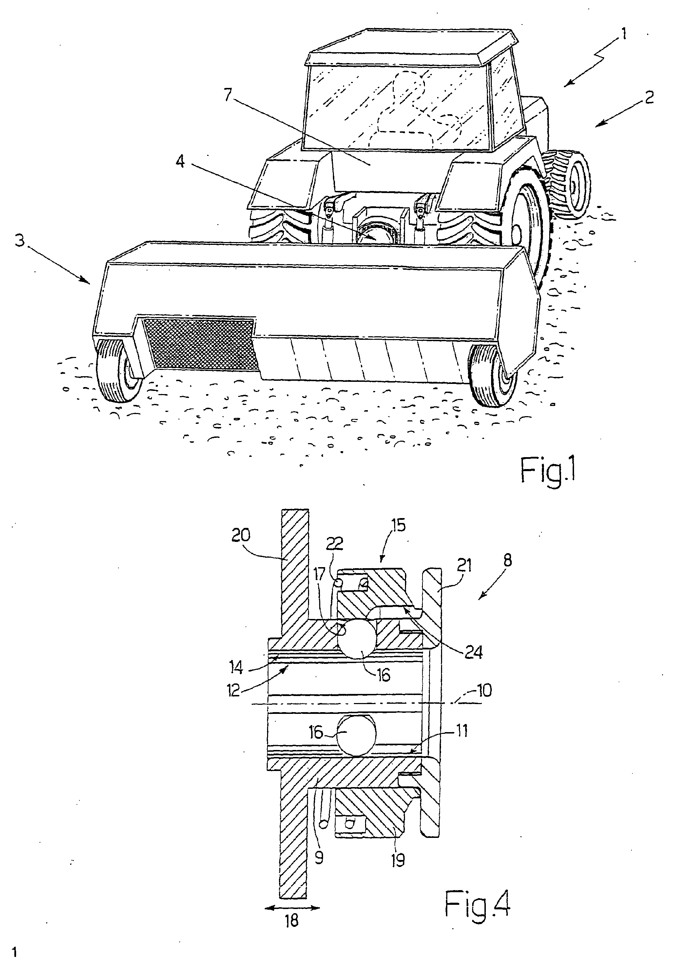

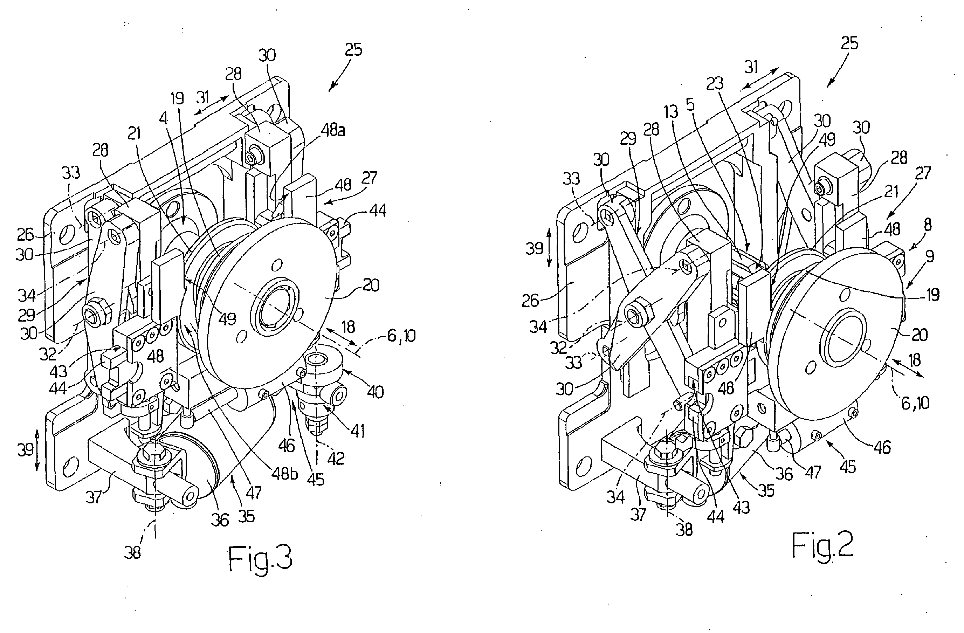

With reference to Figures 1 and 2, number 1 indicates as a whole an agricultural machine comprising a drive unit 2 and an operating unit 3 associated with unit 2. Unit 2 has a power take-off 4 having a powered output shaft 5, which has a substantially horizontal longitudinal axis 6 and is mounted to rotate about axis 6 with respect to a frame 7 of unit 2 and under the control of a known actuating device not shown.

As shown in Figures 2 and 3, unit 3 has an input shaft 8 comprising a tubular end portion 9, which has a longitudinal axis 10, is bounded internally by a surface 11 (Figure 4) substantially coaxial with axis 10, and is movable, as described in detail later on, between an engaged position (Figure 3), in which portion 9 is connected in angularly and axially fixed manner to shaft 5 and is rotated by shaft 5 about axis 6, and a release position (Figure 2).

In the engaged position, portion 9 is connected in angularly fixed manner to shaft 5 by a splined coupling 12 comprising a number of teeth 13 (Figure 2) projecting outwards from an outer surface of shaft 5 and equally spaced about axis 6; and a number of grooves 14 (Figure 4), which are equal in number to teeth 13, are formed on surface 11, are equally spaced about axis 10, and are so shaped and located as to each receive a relative tooth 13 when shaft 5 is inserted axially inside portion 9.

As shown in Figure 4, in the engaged position, portion 9 is also connected in axially fixed manner to shaft 5 by a lock device 15 comprising a number of (in the example shown, three) lock balls 16 equally spaced about axis 10 and each housed inside a relative radial seat 17, which is formed through portion 9 at a relative groove 14, and is so shaped as to allow relative ball 16 to move crosswise to axis 10 when shaft 5 and portion 9 are moved, as described in detail later on, in a direction 18, parallel to axis 6, between said engaged and release positions.

Device 15 also comprises a sleeve 19, which is fitted to portion 9 coaxially with axis 10 and so as to slide, parallel to axis 10, between two annular flanges 20, 21 projecting radially outwards from the outer surface of portion 9.

In actual use, when shaft 5 and portion 9 are in the engaged position, sleeve 19 is normally set, by a spring 22 interposed between flange 20 and sleeve 19, to a lock position (Figure 4), wherein sleeve 19 contacts flange 21, and balls 16, moving crosswise to axis 10, engage respective seats 23 formed on teeth 13, are spaced apart by a distance approximately equal to but no greater than the diameter of shaft 5, and so enable portion 9 to grip shaft 5.

When sleeve 19 is moved, in opposition to spring 22, from the lock position to a release position (not shown), wherein sleeve 19 is positioned substantially contacting flange 20, balls 16, moving crosswise to axis 10, engage respective cavities 24 formed on an inner surface of sleeve 19, are spaced apart by a distance approximately equal to but no less than the diameter of shaft 5, and so enable portion 9 to release shaft 5.

With reference to Figures 2 and 3, shafts 5 and 8 are moved between the engaged and release positions by a hitch assembly 25 comprising an annular supporting plate 26 extending about shaft 5 and fixed releasably to frame 7 of drive unit 2; and a supporting unit 27 supporting portion 9.

Unit 27 comprises a slide 28 fitted in sliding manner to plate 26, via the interposition of a crank mechanism 29, to move linearly in direction 18, and with respect to plate 26, between a forward position (Figure 2) and a withdrawn position (Figure 3).

Crank mechanism 29 comprises two pairs of cranks 30 located on opposite sides of axis 6 in a horizontal direction 31 crosswise to direction 18. The cranks 30 in each pair of cranks 30 are hinged to each other at respective intermediate points to oscillate with respect to each other about a hinge axis 32 parallel to direction 31, and each extend between two respective axes 33, 34 parallel to axis 32, and of which axis 33 is the axis about which crank 30 rotates with respect to plate 26, and axis 34 is the axis about which crank 30 rotates with respect to slide 28.

With reference to Figure 3, cranks 30 are rotated about relative axes 33 by an actuating device 35 comprising an actuating cylinder 36, which is hinged to a supporting bracket 37, projecting from plate 26 in direction 18, to oscillate, with respect to plate 26, about a hinge axis 38 substantially parallel to a vertical direction 39 perpendicular to directions 18 and 31. Cylinder 36 has an output rod (not shown) hinged to a first arm (not shown) of a rocker arm 40, which is hinged to a supporting bracket 41, projecting from plate 26 in direction 18, to oscillate, with respect to plate 26, about an axis 42 parallel to axis 38, and has a second arm (not shown) hinged to slide 28.

Slide 28 is fitted removably with two guides 43 located on opposite sides of axis 6 in direction 31, extending parallel to direction 31, and each supporting a respective slide 44, which is substantially parallelepiped-shaped with a substantially rectangular cross section, and is connected in known manner to relative guide 43 to slide linearly in direction 31 along relative guide 43 and under the control of an actuating device 45 common to both slides 44. Device 45 comprises an actuating cylinder 46, which is fixed to one of slides 44, extends in direction 31, and has an output rod 47 fixed to the other slide 44.

At a free end facing the other slide 44, each slide 44 supports an arm 48 extending in direction 39 and comprising a substantially straight first portion 48a parallel to direction 39, and a curved, upwardly concave second portion 48b located beneath portion 48a.

The two arms 48 are movable, with respect to each other in direction 31 and under the control of device 45, between a rest position, in which the two arms 48 are spaced apart by a distance greater than the diameter of portion 9, and a work position, in which the two arms 48 are spaced apart by a distance substantially equal to the diameter of portion 9 to define a guide 49, which is substantially fork-shaped, extends in a vertical plane perpendicular to axis 6, and is engaged in sliding manner by portion 9.

Operation of hitch assembly 25 will now be described as of the instant in which slide 28 is in the forward position, arms 48 are in the work position, and sleeve 19 is in the lock position.

At this point, as shown in Figure 2, portion 9 is first inserted inside guide 49, is then moved along guide 49 in direction 39, and is finally locked in direction 39 coaxially with axis 6, i.e. in the release position, by means of a known ratchet device not shown.

As portion 9 is inserted inside guide 49, guide 49 moves sleeve 19, in opposition to spring 22, from the lock position to the release position, so that balls 16 are spaced apart by a distance approximately equal to but no less than the diameter of shaft 5.

With reference to Figure 3, once portion 9 is locked in the release position with sleeve 19 also its release position, actuating cylinder 36 is operated to move slide 28 into the withdrawn position, so that portion 9 engages shaft 5, and teeth 13 engage relative grooves 14 to lock shaft 5 and portion 9 angularly to each other.

At this point, actuating cylinder 46 is operated to move arms 48 into the rest position, so that arms 48 release both portion 9 and sleeve 19, sleeve 19 is thus moved by spring 22 into the lock position, and balls 16 engage relative seats 23 to lock shaft 5 and portion 9 axially to each other.

Once shaft 5 and portion 9 are connected, shaft 5 of power take-off 4 is activated, and rotation of shaft 5 about axis 6 is transmitted to portion 9, which, being supported directly and solely by shaft 5, requires no rolling bearing.

## Claims

1. A hitch assembly for an agricultural machine comprising a drive unit (2) having at least one power take-off (4) having an output shaft (5) rotating about a first axis (6); an operating unit (3) having an input shaft (8) rotating about a second axis (10); and a splined coupling (12) for angularly locking said input shaft and said output shaft (8, 5); the hitch assembly comprising a supporting member (49) substantially in the form of a fork and comprising two arms (48) facing each other, the input shaft (8), in use, engaging the arms (48) in sliding manner to translate, in a first direction (39) substantially crosswise to said first axis (6), to and from a release position, wherein the input shaft (8) is coaxial with the output shaft (5); and first actuating means (29, 36) for moving the supporting member (49), in a second direction (18) substantially parallel to said first axis (6), to and from an engaged position, wherein the input shaft and the output shaft (8, 5) are locked angularly to each other by said splined coupling (12); and being **characterized by** also comprising second actuating means (45) for moving the arms (48), with respect to each other and in a third direction (31) substantially perpendicular to said first and said second direction (39, 18), to and from a rest position, wherein the arms (48), in use, release the input shaft (8).

2. A hitch assembly as claimed in Claim 1, wherein the arms (48) are movable, with respect to each other and in said third direction (31), between said rest position and a work position, wherein the arms (48) are engaged in sliding manner by the input shaft (8); first locking means being provided to lock the input shaft (8) to the supporting member (49) in said first direction (39) when the input shaft (8) is in said release position.

3. A hitch assembly as claimed in Claim 1 or 2, wherein said first actuating means (29, 36) comprise a crank mechanism (29), and an actuating cylinder (36) for operating the crank mechanism (29); the arms (48) being carried by said crank mechanism (29).

4. A hitch assembly as claimed in any one of the foregoing Claims, wherein each arm (48) comprises a substantially straight first portion (48a) parallel to said first direction (39); and a curved second portion (48b) with its concavity facing upwards.

5. A hitch assembly as claimed in any one of the foregoing Claims, wherein said second actuating means (45) comprise an actuating cylinder (46) extending in said third direction (31), fixed to one of the arms (48), and having an output rod (47) fixed to the other arm (48).

6. An agricultural machine comprising a drive unit (2) having at least one power take-off (4) having an output shaft (5) rotating about a first axis (6); an operating unit (2) having an input shaft (8) rotating about a second axis (10); a splined coupling (12) for angularly locking said input shaft and said output shaft (8, 5) ; and a hitch assembly (25) as claimed in any one of Claims 1 to 5.

7. An agricultural machine as claimed in Claim 6, and also comprising second locking means (20, 21) for locking the input shaft (8) to the supporting member (49) in said second direction (18) when the input shaft (8) is in said release position.

8. An agricultural machine as claimed in Claim 7, wherein the second locking means (20, 21) comprise two annular flanges (20, 21) projecting radially outwards from said input shaft (8) and located on opposite sides of said supporting member (49) in said second direction (18) when the input shaft (8) is in said release position.

9. An agricultural machine as claimed in any one of Claims 6 to 8, and also comprising third locking means (15) for axially locking said input shaft and said output shaft (8, 5) when the input shaft and the output shaft are in said engaged position.

10. An agricultural machine as claimed in Claim 9, wherein the third locking means (15) comprise gripping means (16) for axially locking said input shaft and said output shaft (8, 5); and third actuating means (49, 22) for moving the gripping means (16) between a lock position locking the input shaft (8) to the output shaft (5), and a further release position.

11. An agricultural machine as claimed in Claim 10, wherein the third actuating means (49, 22) comprise first push means (49) for moving the gripping means (16) from said lock position to said further release position; and second push means (22) for moving the gripping means (16) from said further release position to said lock position.

12. An agricultural machine as claimed in Claim 11, wherein the first push means (49) are carried by the supporting member (49) to move the gripping means (16) from said lock position to said further release position as the input shaft (8) moves into said release position.

## Patentansprüche

1. Kupplungsvorrichtung für eine landwirtschaftliche Maschine, die eine Antriebseinheit (2) umfasst, die mindestens eine Zapfwelle (4) mit einer Ausgangswelle (5), die sich um eine erste Achse (6) dreht, aufweist; eine Betriebseinheit (3) mit einer Eingangswelle (8), die sich um eine zweite Achse (10) dreht; und eine Keilzahnkupplung (12), um die Eingangswelle und die Ausgangswelle (8, 5) im Winkel zueinander zu arretieren; worin die Kupplungsvorrichtung ein Stützteil (49) aufweist, das im Wesentlichen die Form einer Gabel hat und zwei einander zugewandte Arme (48) umfasst, und worin die Eingangswelle (8) im Einsatz in gleitender Weise in die Arme (48) eingreift, um sich in einer ersten Richtung (39), im Wesentlichen quer zu der ersten Achse (6), in eine und aus einer Freigabeposition zu bewegen, worin die Eingangswelle (8) koaxial zu der Ausgangswelle (5) verläuft; und erste Betätigungsmittel (29, 36) zur Bewegung des Stützteils (49) in eine zweite Richtung (18), im Wesentlichen parallel zur ersten Achse (6), in eine und aus einer gekuppelten Position, worin die Eingangswelle und die Ausgangswelle (8, 5) im Winkel zueinander durch die Keilzahnkupplung (12) arretiert sind; und **dadurch gekennzeichnet ist, dass** sie außerdem zweite Betätigungsmittel (45) umfassen zur Bewegung der Arme (48) relativ zueinander und in eine dritte Richtung (31), im Wesentlichen rechtwinklig zu der ersten und zweiten Richtung (39, 18), in eine und aus einer Ruheposition, worin die Arme (48) im Einsatz die Eingangswelle (8) freigeben.

2. Kupplungsvorrichtung gemäß Anspruch 1, worin die Arme (48) relativ zueinander und in die dritte Richtung (31) beweglich sind zwischen der Ruheposition und einer Arbeitsposition, worin in die Arme (48) in gleitender Weise durch die Eingangswelle (8) eingegriffen wird; worin erste Arretierungsmittel bereitgestellt werden, um die Eingangswelle (8) mit dem Stützteil (49) in der ersten Richtung (39) zu arretieren, wenn sich die Eingangswelle (8) in der Freigabeposition befindet.

3. Kupplungsvorrichtung gemäß Anspruch 1 oder 2, worin die ersten Betätigungsmittel (29, 36) einen Kurbelmechanismus (29) und einen Betätigungszylinder (36) für den Betrieb des Kurbelmechanismus (29) umfassen, wobei die Arme (48) durch den Kurbelmechanismus (29) getragen werden.

4. Kupplungsvorrichtung gemäß irgendeinem der vorhergehenden Ansprüche, worin jeder Arm (48) ein im Wesentlichen gerades Stück (48a) parallel zu der ersten Richtung (39) aufweist und ein gebogenes zweites Stück (48b), dessen Wölbung aufwärts weist.

5. Kupplungsvorrichtung gemäß irgendeinem der vorhergehenden Ansprüche, worin die zweiten Betätigungsmittel (45) einen Betätigungszylinder (46) umfassen, der sich in die dritte Richtung (31) erstreckt, an einem der Arme (48) befestigt ist und eine Ausgangsstange (47) aufweist, die an dem anderen Arm (48) befestigt ist.

6. Landwirtschaftliche Maschine, die eine Antriebseinheit (2) umfasst, die mindestens eine Zapfwelle (4) mit einer Ausgangswelle (5) aufweist, die sich um eine erste Achse (6) dreht; eine Betriebseinheit (2), die eine Eingangswelle (8) aufweist, die sich um eine zweite Achse (10) dreht; eine Keilzahnkupplung (12), um die Eingangswelle und die Ausgangswelle (8, 5) im Winkel zueinander zu arretieren; und eine Kupplungsvorrichtung (25) gemäß irgendeinem der Ansprüche 1 bis 5.

7. Landwirtschaftliche Maschine gemäß Anspruch 6, die außerdem zweite Arretierungsmittel (20, 21) umfasst für die Arretierung der Eingangswelle (8) mit dem Stützteil (49) in der zweiten Richtung (18), wenn sich die Eingangswelle (8) in der Freigabeposition befindet.

8. Landwirtschaftliche Maschine gemäß Anspruch 7, worin die zweiten Arretierungsmittel (20, 21) zwei ringförmige Flansche (20, 21) aufweisen, die von der Eingangswelle (8) radial nach außen ragen und sich auf gegenüberliegenden Seiten des Stützteils (49) in der zweiten Richtung (18) befinden, wenn sich die Eingangswelle (8) in der Freigabeposition befindet.

9. Landwirtschaftliche Maschine gemäß irgendeinem der Ansprüche 6 bis 8, die außerdem dritte Arretierungsmittel (15) aufweist, um die Eingangswelle und die Ausgangswelle (8, 5) axial zu arretieren, wenn die Eingangswelle und die Ausgangswelle sich in der gekuppelten Position befinden.

10. Landwirtschaftliche Maschine gemäß Anspruch 9, worin die dritten Arretierungsmittel (15) Greifmittel (16) umfassen, um die Eingangswelle und die Ausgangswelle (8, 5) axial zu arretieren; und dritte Betätigungsmittel (49, 22) zur Bewegung der Greifmittel (16) zwischen einer arretierten Position, welche die Eingangswelle (8) mit der Ausgangswelle (5) arretiert, und einer weiteren Freigabeposition.

11. Landwirtschaftliche Maschine gemäß Anspruch 10, worin die dritten Betätigungsmittel (49, 22) erste Schubmittel (49) zur Bewegung der Greifmittel (16) aus der arretierten Position in die weitere Freigabeposition umfassen; und zweite Schubmittel (22) zur Bewegung der Greifmittel (16) aus der weiteren Freigabeposition in die arretierte Position.

12. Landwirtschaftliche Maschine gemäß Anspruch 11, worin die ersten Schubmittel (49) von dem Stützteil (49) getragen werden, um die Greifmittel (16) aus der arretierten Position in die weitere Freigabeposition zu verschieben, während sich die Eingangswelle (8) in die Freigabeposition bewegt.

## Revendications

1. Ensemble d'attelage pour une machine agricole comprenant une unité d'entraînement(2) ayant au moins une prise de force (4), ayant un arbre de sortie (5) qui tourne autour d'un premier axe (6) : une unité opérationnelle (3) ayant un arbre d'entrée (8) tournant autour d'un second axe (10) : et un accouplement cannelé (12) pour verrouiller de manière angulaire ledit arbre d'entrée et ledit arbre de sortie (8, 5) ; l'ensemble d'attelage comprenant un élément de support (49) sensiblement sous la forme d'une fourche et comprenant deux bras (48) l'un en face de l'autre, l'arbre d'entrée (8), lors de l'utilisation, mettant en prise les bras (48) de manière coulissante pour permettre la translation, dans une première direction (39) sensiblement transversale audit premier axe (6), vers et depuis une position de libération, dans laquelle l'arbre d'entrée (8) est coaxial par rapport à l'arbre de sortie (5) ; et un premier moyen d'actionnement (29, 36) pour déplacer l'élément de support (49), dans une seconde direction (18) sensiblement parallèle audit premier axe (6), vers et depuis une position de prise, dans laquelle l'arbre d'entrée et l'arbre de sortie (8, 5) sont verrouillés de manière angulaire, l'un par rapport à l'autre par ledit accouplement cannelé (12) ; et **caractérisé en ce qu'**il comprend également un second moyen d'actionnement (45) pour déplacer les bras (48) l'un par rapport à l'autre et dans une troisième direction (31), sensiblement perpendiculaire à ladite première et à ladite seconde direction (39, 18), vers et depuis une position de repos,
dans laquelle les bras (48), lors de l'utilisation, libèrent l'arbre d'entrée (8).

2. Ensemble d'attelage selon la revendication 1, dans lequel les bras (48) sont mobiles, l'un par rapport à l'autre et dans ladite troisième direction (31), entre ladite position de repos et une position de travail, dans laquelle les bras (48) sont mis en prise de manière coulissante par l'arbre d'entrée (8) ; un premier moyen de verrouillage étant fourni pour verrouiller l'arbre d'entrée (8) à l'élément de support (49) dans ladite première direction (39) quand l'arbre d'entrée (8) est dans ladite position de libération.

3. Ensemble d'attelage selon la revendication 1 ou 2,
dans lequel ledit premier moyen d'actionnement (29, 36) comprend un mécanisme de vilebrequin (29), et un cylindre d'actionnement (36) pour faire fonctionner le mécanisme de vilebrequin (29) ; les bras (48) étant portés par ledit mécanisme de vilebrequin (29).

4. Ensemble d'attelage selon l'une quelconque des revendications précédentes, dans lequel chaque bras (48) comprend une première partie sensiblement droite (48a) parallèle à ladite première direction (39) ; et une seconde partie incurvée (48b) avec sa face concave orientée vers le haut.

5. Ensemble d'attelage selon l'une quelconque des revendications précédentes, dans lequel ledit second moyen d'actionnement (45) comprend un cylindre d'actionnement (46) s'étendant dans ladite troisième direction (31), fixée à l'un des bras (48), et ayant une tige de sortie (47) fixée à l'autre bras (48).

6. Machine agricole comprenant une unité d'entraînement(2) ayant au moins une prise de force (4) ayant un arbre de sortie (5) tournant autour d'un premier axe (6) ; une unité opérationnelle (2) ayant un arbre de sortie (8) tournant autour d'un second axe (10) ; un accouplement cannelé (12) pour verrouiller de manière angulaire ledit arbre d'entrée et ledit arbre de sortie (8, 5) ; et un ensemble d'attelage (25) selon l'une quelconque des revendications 1 à 5.

7. Machine agricole selon la revendication 6, comprenant également un second moyen de verrouillage (20, 21) pour verrouiller l'arbre d'entrée (8) à l'élément de support (49) dans ladite seconde direction (18) quand l'arbre d'entrée (8) est dans ladite position de libération.

8. Machine agricole selon la revendication 7, dans laquelle le second moyen de verrouillage (20, 21) comprend deux brides annulaires (20, 21) se projetant radialement vers l'extérieur depuis ledit arbre d'entrée (8) et situées sur des côtés opposés dudit élément de support (49) dans ladite seconde direction (18) quand l'arbre d'entrée (8) est dans ladite position de libération.

9. Machine agricole selon l'une quelconque des revendications 6 à 8, comprenant également un troisième moyen de verrouillage (15) pour verrouiller axialement ledit arbre d'entrée et ledit arbre de sortie (8, 5) quand l'arbre d'entrée et l'arbre de sortie sont dans ladite position de prise.

10. Machine agricole selon la revendication 9, dans laquelle le troisième moyen de verrouillage (15) comprend des moyens de saisie (16) pour verrouiller axialement ledit arbre d'entrée et ledit arbre de sortie (8, 5) ; et un troisième moyen d'actionnement (49, 22) pour déplacer le moyen de saisie (16) entre une position de verrouillage verrouillant l'arbre d'entrée (8) à l'arbre de sortie (5) et une autre position de libération.

11. Machine agricole selon la revendication 10, dans laquelle le troisième moyen d'actionnement (49, 22) comprend un premier moyen de poussée (49) pour déplacer le moyen de saisie (16) de ladite position de verrouillage à ladite autre position de libération ; et un second moyen de poussée (22) pour déplacer le moyen de saisie (16) de ladite autre position de libération dans ladite position de verrouillage.

12. Machine agricole selon la revendication 11, dans laquelle le premier moyen de poussée (49) est porté par l'élément de support (49), afin de déplacer le moyen de saisie (16) de ladite position de verrouillage à ladite autre position de libération, quand l'arbre d'entrée (8) se déplace dans ladite position de libération.
